# FASCICULE DE BREVET EUROPEEN

(11) **EP 3 074 308 B1**
(45) Date de publication et mention de la délivrance du brevet: **21.02.2018**
(21) Numéro de dépôt: 14821735.9
(22) Date de dépôt: 25.11.2014
(51) Int. Cl.: B64D 41/00, B64D 43/00, B64D 47/06

(54) **PROCEDE ET SYSTEME POUR LA PRODUCTION OPTIMISEE D'ENERGIE NON PROPULSIVE**
VERFAHREN UND SYSTEM ZUR OPTIMALEN HERSTELLUNG VON NICHTANTRIEBSENERGIE
METHOD AND SYSTEM FOR OPTIMIZED PRODUCTION OF NON-PROPULSIVE ENERGY

(30) Priorité: 27.11.2013 FR 1361711
(43) Date de publication de la demande: 05.10.2016
(73) Titulaire: Safran Power Units, 31200 Toulouse (FR)
(72) Inventeur: RIDEAU, Jean-François, F-31170 Tournefeuille (FR); VAILLANT, Stéphane, F-31140 Fonbeauzard (FR)
(74) Mandataire: Regimbeau
(86) Numéro de dépôt international: PCT/FR2014/053018
(87) Numéro de publication internationale: WO 2015/079155

(56) Documents cités:
- DE-C1- 19 911 018
- FR-A1- 2 902 759
- US-A1- 2004 043 276

## Description

### DOMAINE DE L'INVENTION

Le domaine de l'invention est celui de la génération d'énergie non propulsive dans les aéronefs.

### ETAT DE LA TECHNIQUE

La production d'énergie non propulsive à bord d'un aéronef se fait actuellement soit par les moteurs principaux, qui génèrent également l'énergie propulsive, soit par un générateur secondaire appelé groupe auxiliaire de puissance et désigné le plus souvent « APU » pour Auxiliary Power Unit (voir par exemple DE 199 11 018C1). Un groupe auxiliaire de puissance peut être réalisé de différentes façons.

On connait un premier type de groupe auxiliaire de puissance qui consiste en une turbine à gaz. Or, le fonctionnement d'une turbine à gaz est très dépendant de l'altitude à laquelle elle est opérée. Ainsi, pour assurer une génération suffisante d'énergie non propulsive en vol comme au sol, une turbine à gaz doit être largement surdimensionnée par rapport aux besoins du sol, pour pouvoir répondre aux niveaux de puissance requis en vol.

Ainsi par exemple, la puissance nominale d'une turbine à gaz dimensionnée pour fonctionner en vol est comprise entre 150 et 1500kW en fonction du type d'aéronef, tandis que les exigences au sol en termes de puissances sont limitées à 50 à 500 kW.

Un autre type de groupe auxiliaire de puissance consiste en une pile à combustible. Une pile à combustible présente l'avantage de présenter une puissance indépendante de l'altitude, ce qui permet un dimensionnement optimisé quel que soit le domaine de vol (depuis le sol jusqu'en haute altitude).

En revanche, la gestion thermique de ce composant peut poser problème : contrairement aux turbines à gaz qui évacuent vers l'extérieur les calories produites grâce aux gaz d'échappement, les piles à combustibles doivent être équipées d'un système de refroidissement spécifique. L'intégration de ce système peut s'avérer extrêmement complexe, puisque le groupe auxiliaire de puissance se trouve dans un environnement confiné qui peut être soit un caisson dédié installé à bord de l'aéronef, soit un compartiment de celui-ci.

En vol, la pile à combustible peut être refroidie par une admission d'air dédié, mais au sol par temps chaud, ce refroidissement naturel est impossible. Le système de refroidissement doit être dimensionné pour ce point de fonctionnement au sol et par temps chaud. La pile à combustible est également sensible à un temps froid, ce qui impose d'installer un système complémentaire de chauffage de la pile avant son démarrage par temps froid.

Par conséquent, les solutions de ventilation électrique nécessaires au système de refroidissement, le système de chauffage, la masse et le volume additionnel imposés par l'utilisation d'une pile à combustible rendent cette solution peu performante et peu économique.

Il existe donc un besoin pour une solution de génération d'énergie non propulsive dans un aéronef dont la gestion thermique est simplifiée.

On connaît d'après le document DE 199 11 018 un système de génération de puissance dans un aéronef comprenant un groupe auxiliaire de puissance comprenant une turbine à gaz, ainsi qu'une pile à combustible, les gaz générés par la pile à combustible alimentant la chambre de combustion de la turbine à gaz.

Ce document ne résout pas la problématique de gestion thermique optimisée du système de génération d'énergie non propulsive.

### PRESENTATION DE L'INVENTION

Un but de l'invention est de proposer un système et un procédé de génération d'énergie non propulsive dans un aéronef présentant une gestion thermique simplifiée.

A cet égard, l'invention a pour objet un système de génération d'énergie non propulsive dans un aéronef, comprenant :
- un groupe auxiliaire de puissance, comprenant une turbine à gaz et une pile à combustible,
- une voie d'admission d'air extérieur à l'aéronef, et
- un conduit d'échappement de la turbine à gaz,
le système étant caractérisé en ce que la voie d'admission d'air comprend un conduit de refroidissement de la pile à combustible, en ce que ledit conduit est en communication de fluide avec le conduit d'échappement de la turbine à gaz de sorte que l'éjection de gaz provenant de la turbine à gaz dans le conduit d'échappement provoque une aspiration d'air extérieur à l'aéronef dans le conduit de refroidissement par effet Venturi.

Avantageusement, mais facultativement, le système selon l'invention peut en outre comprendre au moins l'une des caractéristiques suivantes :
- le système comprend en outre un caisson dans lequel est installé le groupe auxiliaire de puissance, le conduit de refroidissement débouchant dans ledit caisson et le conduit d'échappement étant en communication de fluide avec le caisson, l'éjection de gaz provenant de la turbine à gaz dans le conduit d'échappement provoquant une aspiration de l'air du caisson vers l'extérieur de l'aéronef via le conduit d'échappement par effet Venturi, ladite aspiration provoquant à son tour une aspiration d'air extérieur à l'aéronef dans le caisson via le conduit de refroidissement.
- la pile à combustible est du type pile à membrane échangeuse de protons ou pile à oxyde solide.
- la pile à combustible est du type pile à membrane échangeuse de protons à haute température, le système étant installé dans un aéronef du type comprenant une cabine pressurisée, le système comprenant en outre un système d'alimentation en air de la pile, par prélèvement d'air de la cabine pressurisée.
- la pile à combustible et la turbine à gaz sont dimensionnées pour fournir une puissance nominale comprise entre 50 et 500 kW.

L'invention a également pour objet un aéronef comprenant un tel système, et un procédé pour la génération d'énergie non propulsive, le procédé étant caractérisé en ce qu'il comprend :
- la génération d'énergie non propulsive par la turbine à gaz lors d'une phase de fonctionnement au sol de l'aéronef, et
- la génération d'énergie non propulsive par la pile à combustible lors d'une phase de fonctionnement stabilisé en vol de l'aéronef.
vantageusement, mais facultativement, le procédé selon l'invention peut en outre comprendre au moins l'une des caractéristiques suivantes :
- le procédé comprend en outre la génération combinée d'énergie non propulsive par la turbine à gaz et par la pile à combustible lors d'une phase de décollage et/ou d'atterrissage de l'aéronef, le fonctionnement de la turbine à gaz provoquant un refroidissement de la pile à combustible par effet Venturi.
- Le procédé comprend en outre la détection de conditions thermodynamiques de fonctionnement de l'aéronef comprenant la vitesse de l'aéronef, la température de l'air extérieur à l'aéronef, et la température de la pile à combustible, et le déclenchement d'une transition, en fonction desdites conditions, entre un mode de fonctionnement combiné de la turbine à gaz et de la pile à combustible et un mode de fonctionnement seul de la pile.
- Le procédé comprend en outre le fonctionnement respectivement de la pile à combustible ou de la turbine à gaz en cas de défaillance de la turbine à gaz ou de la pile à combustible.

### DESCRIPTION DES FIGURES

D'autres caractéristiques, buts et avantages de la présente invention ressortiront encore de la description qui suit, laquelle est purement illustrative et non limitative, et doit être lue au regard des figures annexées et sur lesquelles :
- La figure 1 représente schématiquement un système permettant la génération d'énergie non propulsive.
- La figure 2 représente les principales étapes d'un procédé de génération d'énergie non propulsive.

### DESCRIPTION DETAILLEE D'AU MOINS UN MODE DE REALISATION

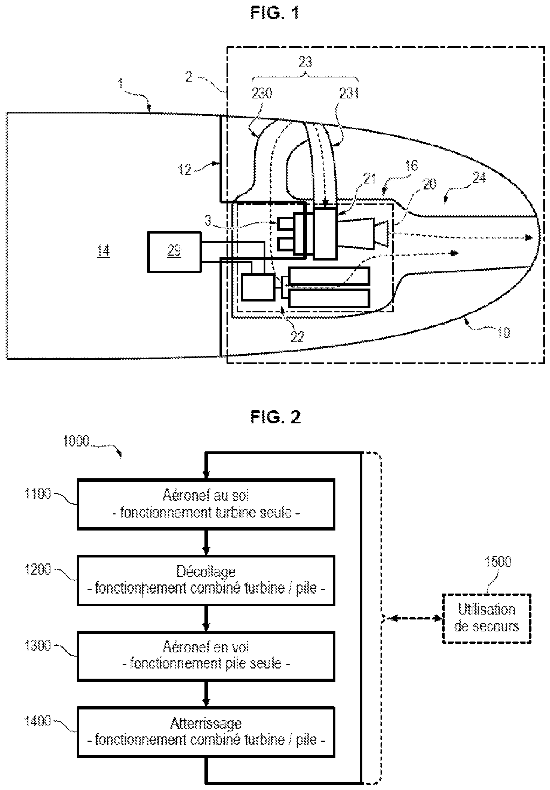

En référence à la figure 1, on a représenté schématiquement un système de génération d'énergie non propulsive 2.

Ce système est agencé dans un aéronef 1, dont seul le cône arrière 10 est représenté. Le système 2 peut être par exemple disposé directement dans le cône arrière de l'aéronef, auquel cas une paroi 12 dite « paroi feu » ferme un compartiment dans lequel le système est disposé et est conçue pour retarder la progression d'un feu vers le reste de l'aéronef.

Le cas échéant, l'aéronef comprend une cabine pressurisée 14 disposée de l'autre côté de la paroi feu 12 par rapport au système.

Selon un autre mode de réalisation non représenté, l'aéronef comprend un caisson dédié 16 dans lequel est disposé le système. Dans ce cas le caisson remplace la paroi feu.

Le système de génération d'énergie non propulsive 2 comprend un groupe auxiliaire de puissance 20, destiné à générer de l'électricité pour l'alimentation de machines accessoires regroupées au sein d'un boitier d'accessoires 3 (appelé en anglais Accessories Gearbox ou encore AGB), ces machines étant des équipements du type pompes, circuits de lubrification, démarreur, le cas échéant systèmes de pressurisation et de chauffage, etc. qui, bien que ne servant pas à la propulsion, sont nécessaires au fonctionnement de la turbomachine et de l'aéronef.

Le groupe auxiliaire de puissance 20 est composé d'une turbine à gaz 21 et d'une pile à combustible 22.

La pile à combustible 22 peut être du type pile à membrane échangeuse de protons (connue sous l'acronyme anglais PEM pour Proton-Exchange Membrane), à haute ou basse température ou pile à oxyde solide (connue sous l'acronyme anglais SOFC pour Solide Oxide Fuel Cell).

De préférence, l'alimentation en air de la pile est réalisée avec de l'air pressurisé provenant de la cabine 14. Dans ce cas, la pile à combustible est préférentiellement mais non limitativement choisie du type pile à membrane échangeuse de protons à haute température.

Pour assurer l'alimentation en air de la pile, le système comprend un système 29 de prélèvement d'air de la cabine pressurisée, représenté de façon schématique sur la figure 1, et qui peut comprendre de manière classique un compresseur pour prélever un débit d'air de la cabine, et un conduit d'alimentation en air de la pile (non représentés).

Le système 2 comprend en outre une voie d'admission d'air 23 permettant le refroidissement de la pile à combustible 22 et l'alimentation en air de la turbine à gaz 21, par un conduit débouchant à l'extérieur de l'aéronef via un orifice pratiqué dans la paroi du cône arrière.

De préférence, la voie d'admission d'air 23 comprend un conduit 230 de refroidissement de la pile à combustible, et un conduit d'alimentation en air 231 de la turbine à gaz, ces conduits pouvant éventuellement être réunis entre le groupe auxiliaire de puissance et l'orifice d'admission d'air.

Le système 2 comprend en outre un conduit d'échappement 24 de la turbine à gaz, dans lequel sont émis les gaz éjectés par la turbine, et qui débouche à l'extérieur de l'aéronef.

Le système 2 est conformé pour que le fonctionnement de la turbine à gaz permette le refroidissement de la pile à combustible par effet Venturi.

A cet égard, le conduit d'échappement 24 de la turbine à gaz est en communication de fluide avec la voie d'admission d'air 23, et plus précisément avec le conduit 230 de refroidissement de la pile à combustible.

Ainsi, lors du fonctionnement de la turbine à gaz, l'éjection des gaz provenant de la turbine dans le conduit d'échappement provoque par aspiration un flux d'air s'écoulant depuis l'environnement de la pile à combustible vers l'extérieur de l'aéronef, ce qui entraine l'aspiration d'air provenant de l'extérieur à l'aéronef dans le conduit 230, qui permet de refroidir la turbine. Le débit d'air dans le conduit 230 est de l'ordre de 100 à 600 g/s.

Selon un mode de réalisation avantageux de l'invention, le groupe auxiliaire de puissance 20 est disposé dans un caisson 16 dans lequel débouche le conduit 230 de refroidissement de la pile à combustible, ce caisson 16 étant également en communication de fluide avec le conduit 24 d'évacuation d'air.

Le caisson 16 permet de réduire le volume dans lequel se trouve le groupe auxiliaire de puissance, et d'améliorer la ventilation de la pile à combustible.

Dans ce cas, l'échappement des gaz provoque une aspiration de l'air du caisson 16 vers le conduit d'échappement 24 et donc vers l'extérieur de l'aéronef, et ainsi cette aspiration provoque à son tour l'admission d'air extérieur dans le caisson 16 via le conduit 230.

On a représenté en pointillés sur la figure 1 les mouvements d'air tels que :
- l'éjection des gaz de la turbine,
- l'aspiration d'air pour le refroidissement de la pile, et
- l'alimentation en air de la turbine.

En référence à la figure 2, on a représenté les principales étapes d'un procédé 1000 de génération d'énergie non propulsive dans un aéronef, mis en oeuvre au moyen du système précédemment décrit.

Ce procédé comprend l'utilisation séquentielle de la turbine à gaz et de la pile à combustible en fonction des différentes phases de fonctionnement de l'aéronef, et notamment une utilisation différente du groupe auxiliaire de puissance, selon que l'aéronef se trouve au sol, en vol stabilisé, ou en phase de décollage ou d'atterrissage.

Au cours d'une phase de fonctionnement au sol 1100 de l'aéronef, seule la turbine à gaz est en fonctionnement, pour générer l'énergie non propulsive nécessaire au fonctionnement des fonctions accessoires de l'aéronef.

Lors de ce fonctionnement, si le temps est chaud, par exemple lorsque la température dans le caisson est de l'ordre de 80-100°C, la turbine à gaz permet de refroidir, si nécessaire, la pile à combustible par effet Venturi, comme décrit précédemment, en faisant circuler dans le caisson un flux d'air extérieur sans cesse renouvelé.

Si le temps est trop froid pour le fonctionnement de la pile, par exemple si la température est de l'ordre de -40°C ou inférieure à celle-ci, le fonctionnement de la turbine à gaz située à proximité de la pile, dans le même caisson ou dans le cône arrière de l'aéronef, permet également de réchauffer la pile.

Une fois réchauffée le cas échéant, lors d'une phase 1200 de décollage de l'aéronef, la pile à combustible et la turbine à gaz sont utilisées simultanément pour produire l'énergie non propulsive de l'aéronef.

Ceci permet à la turbine à gaz, à la fois de contribuer à la génération d'énergie non propulsive, mais également de refroidir efficacement la pile à combustible par effet Venturi. En effet, en l'absence du fonctionnement de la turbine, dans une phase de décollage où l'aéronef se trouve dans des zones de faibles altitudes et temps chaud, il est possible que la température de l'air extérieur soit trop élevée pour permettre le refroidissement de la pile par simple entrée d'air dans la voie d'admission d'air 23.

En revanche, une fois une phase 1300 de vol stabilisé atteinte, l'aéronef se trouve à une zone d'altitude plus élevée, où l'air est plus froid, ce qui permet de s'affranchir de la ventilation par effet Venturi, le refroidissement étant opéré par admission d'air extérieur.

Par conséquent, lors de cette phase de vol, la turbine à gaz est éteinte et seule la pile à combustible est utilisée pour générer l'énergie non propulsive.

Avantageusement, mais facultativement, la turbine à gaz peut être éteinte avant que l'aéronef n'ait atteint cette phase de vol stabilisé, lorsque les conditions thermodynamiques permettent le refroidissement de la pile par admission d'air extérieur (sans effet Venturi).

Les conditions comprennent :
- la vitesse de l'aéronef, qui impacte directement le débit d'air dans la voie d'admission d'air 23 ; à titre d'exemple, en vitesse de croisière, le débit d'air extérieur admis est compris entre 3 et 6 kg/s, dont une majeure proportion, par exemple de l'ordre de 3 à 4 kg/s, circule dans le conduit 231 pour l'alimentation de la turbine à gaz,
- la température de l'air extérieur à l'aéronef, et
- la température de la pile

Le procédé peut ainsi comprendre la mesure des paramètres décrits ci-avant, et la commande de la transition entre fonctionnement combiné de la turbine et de la pile et le fonctionnement seul de la pile lorsque les conditions thermodynamiques permettant le refroidissement de la pile sans effet Venturi sont atteintes.

Ainsi, comme la turbine à gaz ne fonctionne pas en altitude, il n'est pas nécessaire de la surdimensionner pour assurer son bon fonctionnement sur tout le vol.

Ainsi, la turbine à gaz et la pile à combustible sont dimensionnées chacune pour fournir une puissance électrique suffisante au fonctionnement des accessoires de l'aéronef, c'est-à-dire comprise entre 50 et 500 kW, en fonction du type et de la taille de l'aéronef.

Enfin, en phase d'atterrissage 1400, tout comme lors de la phase de décollage, la turbine à gaz est redémarrée pour opérer une transition avec un fonctionnement au sol et assurer le refroidissement de la pile si la température extérieure de l'air est insuffisante pour refroidir la pile.

De façon analogue à la transition entre le fonctionnement combiné et le fonctionnement de la pile seule, l'instant auquel est redémarrée la turbine à gaz est celui où les conditions thermodynamiques, comprenant la vitesse de l'aéronef, la température de l'air extérieur, et la température de la pile, permettent sont insuffisants pour assurer le refroidissement de la pile.

Dans ce cas, il peut être préférable d'établir une marge de sécurité, et par exemple de redémarrer la turbine dès que l'aéronef entame une phase d'atterrissage, ou dès que la température de l'air extérieur croît.

Par ailleurs, le système proposé permet également d'utiliser la pile à combustible ponctuellement lors d'une phase de défaillance de la turbine à gaz, par exemple en phase au sol ou en phase transitoire (atterrissage ou décollage), ou d'utiliser la turbine à gaz pour compenser une défaillance de la pile à combustible pour des altitudes de vol limitées. Cette utilisation de secours de l'une des deux sources d'énergie est représentée par une étape 1500 dans le procédé.

Le couplage séquentiel de la pile à combustible et de la turbine à gaz permet donc de s'affranchir d'un système spécifique dédié au refroidissement ou au réchauffage de la pile à combustible, et permet également d'éviter un surdimensionnement de la turbine.

## Revendications

1. Système (2) de génération d'énergie non propulsive pour un aéronef, comprenant:
- un groupe auxiliaire de puissance (20), comprenant une turbine à gaz (21) et une pile à combustible (22),
- une voie (23) d'admission d'air, lors de l'usage du système dans l'aéronef, cette voie étant une voie d'admission d'air extérieur à l'aéronef, et
- un conduit d'échappement (24) de la turbine à gaz,
le système étant **caractérisé en ce que** la voie d'admission d'air (23) comprend un conduit de refroidissement (230) de la pile à combustible, **en ce que** ledit conduit est en communication de fluide avec le conduit d'échappement (24) de la turbine à gaz de sorte que l'éjection de gaz provenant de la turbine à gaz dans le conduit d'échappement provoque, lors de l'utilisation du système dans l'aéronef, une aspiration d'air extérieur à l'aéronef dans le conduit de refroidissement (230) par effet Venturi.

2. Système (2) selon la revendication 1, comprenant en outre un caisson (16) dans lequel est installé le groupe auxiliaire de puissance (20), le conduit de refroidissement (230) débouchant dans ledit caisson et le conduit d'échappement (24) étant en communication de fluide avec le caisson (16), l'éjection de gaz provenant de la turbine à gaz dans le conduit d'échappement provoquant, lors de l'utilisation du système dans l'aéronef, une aspiration de l'air du caisson (16) vers l'extérieur de l'aéronef via le conduit d'échappement (24) par effet Venturi, ladite aspiration provoquant à son tour une aspiration d'air extérieur à l'aéronef dans le caisson via le conduit de refroidissement.

3. Système (2) selon l'une des revendications 1 ou 2, dans lequel la pile à combustible (22) est du type pile à membrane échangeuse de protons ou pile à oxyde solide.

4. Système (2) selon l'une des revendications 1 à 3, dans lequel la pile à combustible (22) est du type pile à membrane échangeuse de protons à haute température, le système étant installé dans un aéronef (1) du type comprenant une cabine pressurisée (14), le système comprenant en outre un système d'alimentation en air (29) de la pile (22), par prélèvement d'air de la cabine pressurisée (14).

5. Système (2) selon l'une des revendications 1 à 4, dans lequel la pile à combustible (22) et la turbine à gaz (21) sont dimensionnées pour fournir une puissance nominale comprise entre 50 et 500 kW.

6. Aéronef (1), comprenant un système (2) selon l'une des revendications 1 à 5.

7. Procédé (1000) de génération d'énergie non propulsive, mis en oeuvre par un système selon l'une des revendications 1 à 5,
le procédé étant **caractérisé en ce qu'**il comprend :
- la génération (1100) d'énergie non propulsive par la turbine à gaz lors d'une phase de fonctionnement au sol de l'aéronef, et
- la génération (1300) d'énergie non propulsive par la pile à combustible lors d'une phase de fonctionnement stabilisé en vol de l'aéronef.

8. Procédé (1000) de génération d'énergie non propulsive selon la revendication 7, comprenant en outre la génération (1200, 1400) combinée d'énergie non propulsive par la turbine à gaz et par la pile à combustible lors d'une phase de décollage et/ou d'atterrissage de l'aéronef, le fonctionnement de la turbine à gaz (21) provoquant un refroidissement de la pile à combustible (22) par effet Venturi.

9. Procédé (1000) de génération d'énergie non propulsive selon la revendication 8, comprenant en outre la détection de conditions thermodynamiques de fonctionnement de l'aéronef comprenant la vitesse de l'aéronef, la température de l'air extérieur à l'aéronef, et la température de la pile à combustible, et le déclenchement d'une transition, en fonction desdites conditions, entre un mode de fonctionnement combiné de la turbine à gaz (21) et de la pile à combustible (22) et un mode de fonctionnement seul de la pile.

10. Procédé (1000) de génération d'énergie non propulsive selon l'une des revendications 7 à 9, comprenant en outre le fonctionnement (1500) respectivement de la pile à combustible (22) ou de la turbine à gaz (21) en cas de défaillance de la turbine à gaz (21) ou de la pile à combustible (22).

## Patentansprüche

1. System (2) zur Erzeugung von Nichtantriebsenergie für ein Luftfahrzeug, umfassend:
- ein Hilfstriebwerk (20), umfassend eine Gasturbine (21) und eine Brennstoffzelle (22),
- einen Lufteinlasskanal (23) bei der Verwendung des Systems im Luftfahrzeug, wobei dieser Kanal ein Außenlufteinlasskanal des Luftfahrzeugs ist, und
- eine Abgasleitung (24) der Gasturbine,
wobei das System **dadurch gekennzeichnet ist, dass** der Lufteinlasskanal (23) einen Kühlkanal (230) der Brennstoffzelle umfasst und dass der Kanal in Fluidkommunikation mit der Abgasleitung (24) der Gasturbine derart ist, dass das Ausstoßen von Gas aus der Gasturbine in die Abgasleitung bei der Verwendung des Systems im Luftfahrzeug zu einer Ansaugung von Luft von außerhalb des Luftfahrzeugs in den Kühlkanal (230) durch Venturi-Effekt führt.

2. System (2) nach Anspruch 1, umfassend ferner ein Gehäuse (16), in dem das Hilfstriebwerk (20) installiert ist, wobei der Kühlkanal (230) in das Gehäuse ausmündet und die Abgasleitung (24) in Fluidkommunikation mit dem Gehäuse (16) ist,
wobei das Ausstoßen von Gas aus der Gasturbine in die Abgasleitung bei der Verwendung des Systems im Luftfahrzeug zu einer Ansaugung von Luft des Gehäuses (16) nach außerhalb des Luftfahrzeugs über die Abgasleitung (24) durch Venturi-Effekt führt, wobei die Ansaugung ihrerseits zu einer Ansaugung von Luft von außerhalb des Luftfahrzeugs in das Gehäuse über den Kühlkanal führt.

3. System (2) nach einem der Ansprüche 1 oder 2, wobei die Brennstoffzelle (22) vom Typ Zelle mit Protonentauschermembran oder Zelle mit festem Oxid ist.

4. System (2) nach einem der Ansprüche 1 bis 3, wobei die Brennstoffzelle (22) vom Typ Zelle mit Protonentauschermembran bei hoher Temperatur ist, wobei das System in ein Luftfahrzeug (1) der Bauart eingebaut ist, umfassend eine Druckkabine (14), wobei das System ferner ein Luftversorgungssystem (29) der Zelle (22) durch Entnahme von Luft aus der Druckkabine (14) umfasst.

5. System (2) nach einem der Ansprüche 1 bis 4, wobei die Brennstoffzelle (22) und die Gasturbine (21) bemessen sind, um eine Nennleistung zwischen 50 und 500 kW inklusive bereitzustellen.

6. Luftfahrzeug (1), umfassend ein System (2) nach einem der Ansprüche 1 bis 5.

7. Verfahren (1000) zur Erzeugung von Nichtantriebsenergie, umgesetzt von einem System nach einem der Ansprüche 1 bis 5,
wobei das Verfahren **dadurch gekennzeichnet ist, dass** es umfasst:
- die Erzeugung (1100) von Nichtantriebsenergie durch die Gasturbine bei einer Betriebsphase am Boden des Luftfahrzeugs, und
- die Erzeugung (1300) von Nichtantriebsenergie durch die Brennstoffzelle bei einer stabilisierten Betriebsphase im Flug des Luftfahrzeugs.

8. Verfahren (1000) zur Erzeugung von Nichtantriebsenergie nach Anspruch 7, umfassend ferner die kombinierte Erzeugung (1200, 1400) von Nichtantriebsenergie durch die Gasturbine und durch die Brennstoffzelle bei einer Start- und/oder Landephase des Luftfahrzeugs, wobei der Betrieb der Gasturbine (21) zu einer Kühlung der Brennstoffzelle (22) durch Venturi-Effekt führt.

9. Verfahren (1000) zur Erzeugung von Nichtantriebsenergie nach Anspruch 8, umfassend ferner die Ermittlung von thermodynamischen Betriebsbedingungen des Luftfahrzeugs, umfassend die Geschwindigkeit des Luftfahrzeugs, die Temperatur der Außenluft des Luftfahrzeugs und die Temperatur der Brennstoffzelle, und das Auslösen eines Übergangs in Abhängigkeit von den Bedingungen zwischen einem kombinierten Betriebsmodus der Gasturbine (21) und der Brennstoffzelle (22) und einen Betriebsmodus nur der Zelle.

10. Verfahren (1000) zur Erzeugung von Nichtantriebsenergie nach einem der Ansprüche 7 bis 9, umfassend ferner den Betrieb (1500) jeweils der Brennstoffzelle (22) oder der Gasturbine (21) bei Ausfall der Gasturbine (21) oder der Brennstoffzelle (22).

## Claims

1. A system (2) for generating non-propulsive energy in an aircraft, comprising:
- an auxiliary power unit (20) comprising a gas turbine (21) and a fuel cell (22),
- an intake channel (23) for air from outside the aircraft, and
- an exhaust duct (24) of the gas turbine,
the system being **characterized in that** the air intake channel (23) comprises a cooling duct (230) for the fuel cell, **in that** said duct is in fluid communication with the exhaust duct (24) of the gas turbine so that the ejection of gas coming from the gas turbine into the exhaust duct causes aspiration of air from outside the aircraft into the cooling duct (230) by Venturi effect.

2. The system (2) according to claim 1, further comprising a chamber (16) wherein is installed the auxiliary power unit (20), the cooling duct (230) leading into said chamber and the exhaust duct (24) being in fluid communication with the chamber (16),
the ejection of gas coming from the gas turbine into the exhaust duct causing aspiration of air from the chamber (16) toward the outside of the aircraft through the exhaust duct (24) by Venturi effect, said aspiration in turn causing aspiration of air from outside the aircraft into the chamber through the cooling duct.

3. The system (2) according to one of claims 1 or 2, wherein the fuel cell (22) is of the proton-exchange membrane cell or solid-oxide cell type.

4. The system (2) according to one of claims 1 to 3, wherein the fuel cell (22) is of the high temperature proton-exchange membrane cell type, the system being installed in an aircraft (1) of the type comprising a pressurized cabin (14), the system further comprising an air supply system (29) for the cell (22) by extracting air from the pressurized cabin (14).

5. The system (2) according to one of claims 1 to 4, wherein the fuel cell (22) and the gas turbine (21) are sized to supply a nominal power comprised between 50 and 500 kW.

6. An aircraft (1) comprising a system (2) according to one of claims 1 to 5.

7. A method (1000) for generating non-propulsive energy, implemented by a system according to one of claims 1 to 5,
the method being **characterized in that** it comprises:
- generation (1100) of non-propulsive energy by the gas turbine during a ground operating phase of the aircraft, and
- generation (1300) of non-propulsive energy by the fuel cell during a stabilized flight operating phase of the aircraft.

8. The method (1000) for generating non-propulsive energy according to claim 7, further comprising combined generation (1200, 1400) of non-propulsive energy by the gas turbine and by the fuel cell during a takeoff and/or landing phase of the aircraft, the operation of the gas turbine (21) causing cooling of the fuel cell (22) by Venturi effect.

9. The method (1000) for generating non-propulsive energy according to claim 8, further comprising the detection of thermodynamic operating conditions of the aircraft comprising the speed of the aircraft, the temperature of the air outside the aircraft, and the temperature of the fuel cell, and the triggering of a transition, depending on said conditions, between a combined operating mode of the gas turbine (21) and the fuel cell (22) and an operating mode for the cell alone.

10. The method (1000) for generating non-propulsive energy according to one of claims 7 to 9, further comprising the operation (1500) respectively of the fuel cell (22) or the gas turbine (21) in the event of failure of the gas turbine (21) or the fuel cell (22).
